# EUROPEAN PATENT SPECIFICATION

(11) **EP 0 480 466 B1**
(45) Date of publication and mention of the grant of the patent: **13.12.1995**
(21) Application number: 91117391.2
(22) Date of filing: 11.10.1991
(51) Int. Cl.: C08G 77/26, C08K 5/54

(54) **Siliconic U.V. stabilizers containing reactive groups**
Reaktive Gruppen enthaltende Silicone als UV-Stabilisatoren
Stabilisants UV du type silicone contenant des groupes réactives

(30) Priority: 12.10.1990 IT 2171890
(43) Date of publication of application: 15.04.1992
(73) Proprietor: GREAT LAKES CHEMICAL ITALIA S.r.l., I-20138 Milano (IT)
(72) Inventor: Costanzi, Silvestro, Dr., I-20090 Lodivecchio, Milan (IT); Neri, Carlo, Dr., I-20097 San Donato Milanese, Milan (IT); Farris, Rossella, Dr., I-20097 San Donato Milanese, Milan (IT)
(74) Representative: Barz, Peter, Dr.

(56) References cited:
- EP-A- 0 343 717
- EP-A- 0 358 190
- PATENT ABSTRACTS OF JAPAN vol. 4, no. 54 (C-8)(536) 23 April 1980 & JP-A-55 025 432 (NIPPON GENSHIRYOKU KENKYUSHO) 23 February 1980

## Description

The present invention relates to compounds which are suitable for stabilizing organic polymers against ultra-violet radiation and heat and which contain sterically hindered piperidyl groups as well as reactive groups which can be linked to the polymeric structure to be stabilized in the molecule.

The present invention also provides processes for the preparation of these stabilizers and the polymeric compositions containing them.

It is known that organic polymers undergo degradation with time, due to exposure to atmospheric agents and, above all, to ultra-violet radiation. They are also easily degradable during working and transformation processes because of the high temperatures reached therein.

This degradation causes an impairment of the physical characteristics of the organic polymers, for example a decrease in the breaking load and flexibility, as well as changes in the optical properties thereof. To control said degradation, stabilizers are normally incorporated into the organic polymers.

A group of compounds widely used for this purpose are the sterically hindered amines.

Us-A-4,325,864 and 4,346,188 describe, for example, the use of derivatives of pyrrolidine as UV stabilizers and US-A-3,840,494 discloses the use of esters of 2,2,6,6-tetraalkylpiperidine-4-ol.

In EP-A-162524 and IT-A-21935/86, derivatives of pyrrolidine, morpholine and piperidine which also have a hydrolyzable silyl group in the molecule are described.

These compounds give rise, by hydrolysis of the silyl groups, to complex resin structures which can last for a long time inside the organic copolymer in which they have been incorporated.

The formation of these complex resin structures inside the organic polymer to be stabilized is not easily controllable, however, which means that different products are obtained each time.

A group of polymer stabilizers which contain sterically hindered piperidyl groups and are easily obtainable with well-defined, predetermined structures and which can, therefore, be incorporated in a homogeneous and easily controllable way into the polymer to be stabilized, is described in IT-A-20762/88 filed by the applicant.

However, even if the incorporation of the piperidyl stabilizer in a polymeric structure allows its homogeneous dispersion within the polymeric materials to be stabilized, and has a long-lasting effect inside the organic polymer, there are certain cases where these stabilizers are not completely satisfactory for the intended uses. For example, corresponding manufactured articles may come into contact with particular solvents which are capable of extracting the stabilizing siloxanic polymer or are designed for contact with food in which case it must be absolutely sure that the stabilizer does not migrate in any way towards the surface of the manufactured article.

Therefore, the present invention concerns a new group of polymeric stabilizers which overcomes the above-mentioned drawbacks of prior art stabilizers. In particular, there has been found a new group of polymer-stabilizing compounds which feature, apart from the sterically hindered piperidyl groups, reactive organic groups which can be linked to the polymeric structure to be stabilized.

Accordingly, one aspect of the present invention relates to polymer-stabilizing compounds of general formula (I): 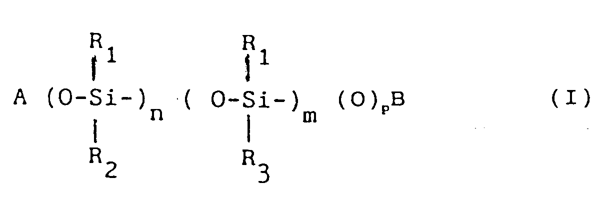
wherein:
m and n, the same or different from each other, are integers of from 1 to 50;
A and B, the same or different from each other, represent hydrogen, -Si(CH₃)₃ or a linear or branched alkyl radical R₄ containing from 1 to 6 carbon atoms; or A and B taken together stand for a direct bond thereby giving rise to a cyclic structure;
p is 0 when A and B together are a direct bond and is 1 in all other cases;
R₁ is methyl, phenyl, alkoxy (e.g. C₁-C₄ alkoxy), hydroxy, -OSi(OR)₃, R being a linear or branched (preferably C₁-C₆) alkyl radical (particularly CH₃ or C₂H₅), or -OSi(CH₃)₃;
R₂ is selected from CH₂=CH, H₂N-(CH₂)₃-, 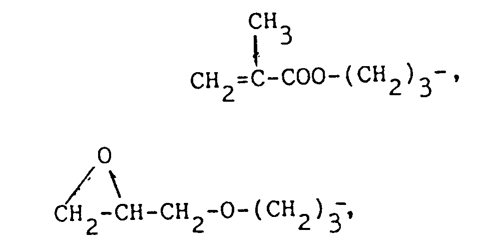
H₂N-(CH₂)₃-NH-(CH₂)₃-, 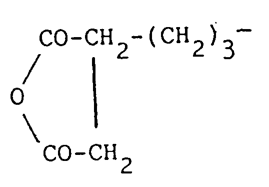
and 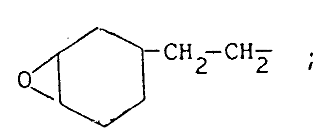
and
R₃ is a group of one of the following formulae: 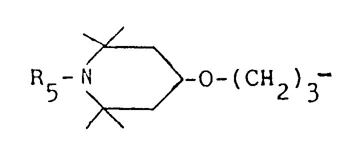
(2,2,6,6-tetramethylpiperidyl-4-oxypropyl) 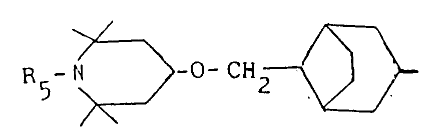
(2,2,6,6-tetramethylpiperidyl-4-oxymethylene-norbornyl) 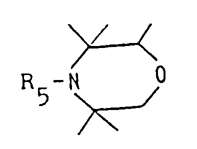
(3,3,5,5-tetramethyl-2-morpholyl-methyl);
R₅ being H, CH₃ or C₆H₅-CH₂.

The stabilizers corresponding to the above formula (I) are oligomers and polymers which preferably have a random distribution of monomeric units and are of linear and/or cyclic structure.

In particular, they have a linear structure when A and B, the same or different, represent hydrogen, a -Si(CH₃)₃ group or an alkyl radical R₄, whereas they have a cyclic structure when A and B taken together represent a direct bond.

In the case of a linear structure, stabilizers are preferred wherein the total number of monomeric units (n+m) ranges from 4 to 50 (particularly 4 to 30), whereas in the case of a cyclic structure it is preferable to have stabilizers where (m+n) ranges from 3 to 7 (e.g. from 4 to 6).

In particular, in the case of stabilizers with linear structure, preferred products are those wherein R₁ is methyl whereas R₃ is a group of formula 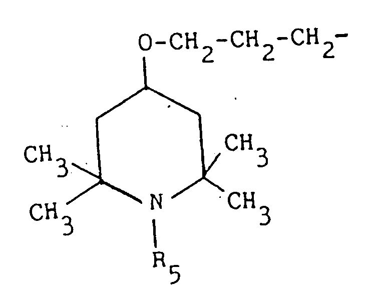
where R₅ has the meanings specified above.

When one or more of the groups R₁ in general formula (I) represent -OSi(OR)₃ (or -OSi(CH₃)₃) these groups, in the presence of small quantities of water, can give rise to bridging structures which link two molecules of (I), at the same time releasing 2 equivalents of compound of formula R₁OH. These structures are also covered by the present invention.

The polymer stabilizing compounds of general formula (I) in which A and B both represent hydrogen, can easily be prepared by reacting, in the required ratios and depending on the value of n and m, respectively to be reached, dialkoxysilanes of general formula (II): 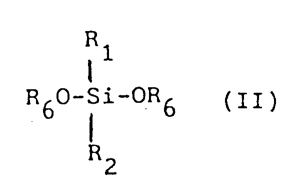
wherein R₁ and R₂ have the meanings given above and R₆ is a C₁-C₄ alkyl group (particularly methyl or ethyl), with dialkoxysilanes of general formula (III): 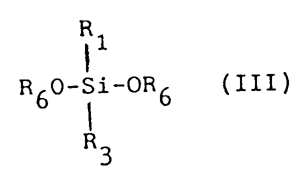
wherein R₁, R₃ and R₆ have the meanings given above; in the presence of water and a suitable catalyst according to the following reaction scheme: 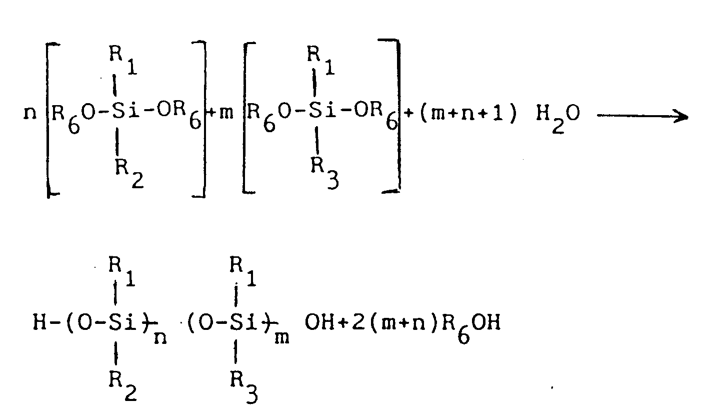
Preferably the reaction is carried out at the reflux temperature of the reactants and preferably until the presence of the reactants is no longer detectable by gas chromatographical analysis.

The reaction time generally ranges from 2 to 10 hours.

Suitable catalysts are, e.g., dibutyl tin dilaurate, zinc octoate, tin octoate and alkali hydroxides. The concentration of the catalyst usually ranges from 0.005 to 0.5% by weight with respect to the reactants.

At the end of the reaction an organic solvent chosen from, e.g., saturated or unsaturated hydrocarbons, may be added which, by dissolving the polymer, causes separation of the water.

The extraction solvent may then be selected from aliphatic, cycloaliphatic and aromatic hydrocarbons such as heptane, cyclohexane and toluene.

After eliminating the solvent by, e.g., distillation, the desired product may be obtained, together with a certain amount of cyclic product. Usually two products are obtained, i.e., those of formulae (Ia) and (Ia₁): 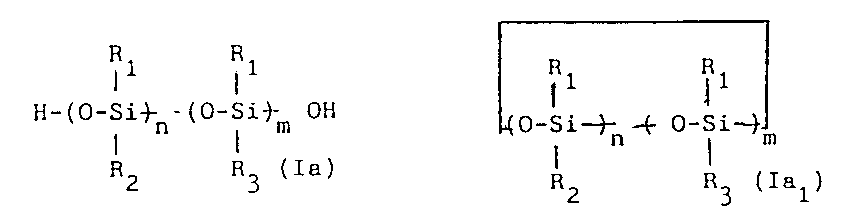
wherein R₁, R₂, R₃, m and n have the above meanings. The relative concentrations of the two structures in the final mixture depend on the reaction conditions.

For example, by operating at 140°C for 6 to 8 hours, products containing 80 to 85% by weight of product of formula (Ia) are usually obtained.

The dialkoxysilanes of formula (II) are commercial products, whereas the dialkoxysilanes of formula (III) can be synthesized, e.g., by the process described in IT-A-21935/86.

The compounds of formula (I) in which at least one of A and B is a -Si(CH₃)₃ group can be prepared by reacting the corresponding products of formula (Ia) above with one of the following compounds:
((CH₃)₃SiCl (trimethylchlorosilane)
(CH₃)₃Si-O-Si(CH₃)₃(hexamethyldisiloxane)
(CH₃)₃Si-NH-Si(CH₃)₃(hexamethyldisilazane).

The corresponding reactions proceed as follows: 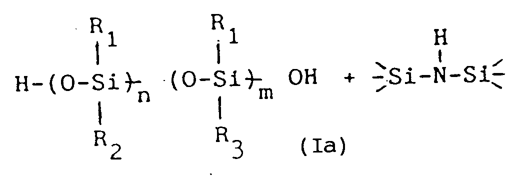
or ( + 〉̶Si-O-Si〈̶);
or ( + 2〉̶Si-Cl) 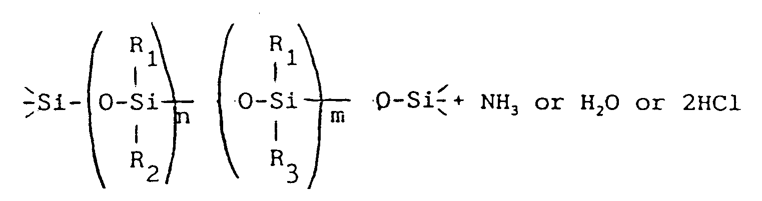
Preferably the reactions are carried out at a temperature of from 20 to 120°C, particularly from 40 to 80°C, for 1 to 5 hours. The above reactions can be carried out in the presence of small quantities of KOH (e.g. about 0.05% by weight with respect to the siliconic polymer) which is eliminated at the end of the reaction by washing the product with water.

The stabilizers of general formula (I) in which A and B represent a linear or branched alkyl group R₄ which contains from 1 to 6 carbon atoms can be synthesized as follows:

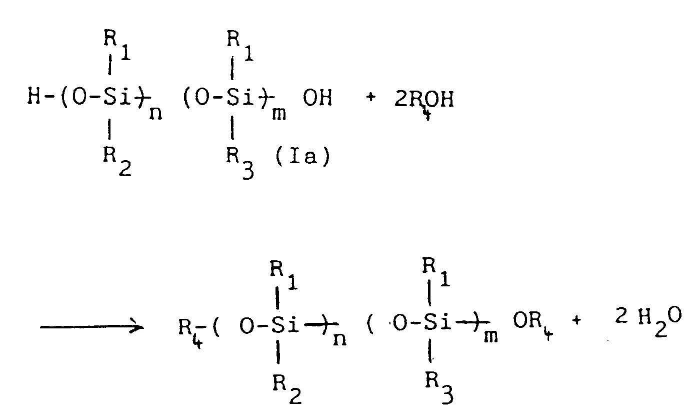

Preferably, the above reaction is carried out in the presence of a catalyst, in quantities of, e.g., about 0.5% by weight with respect to the compound (Ia), and at temperatures usually ranging from 80 to 130°C. The reaction time generally is from 1 to 8 hours.

Catalysts suitable for the above purpose are, e.g., KOH, zinc oxide, dibutyl tin dilaurate, butyl tin trilaurate, tributyl tin laurate and alkali metal alcoholates (CH₃ONa, C₂H₅ONa etc).

Finally, the stabilizers of formula (I) in which at least 90% of the molecules have a cyclic structure of formula (Ia₁) shown above can be synthesized by heating the above linear products to a temperature of from 130 to 180°C under a vacuum of 0.5 to 2 mm Hg.

The reaction is usually carried out in the presence of small quantities of KOH (e.g. 0.05% to 0.1% by weight of the weight of compound (I)) for 2 to 5 hours.

Alternatively, the cyclic products can be obtained by hydrolysis of two corresponding dialkoxysilane or dichlorosilane monomers in the required ratios.

In this case the molar ratios of the two components of the final polymer preferably range from 1 to 3 moles of monomer containing the reactive group per 3 moles of monomer containing the sterically hindered amine.

The stabilizers of the present invention are characterized by a reactive functionality which can link them to the polymer matrix or reinforcing material of the polymer, thus preventing the stabilizer from leaving the matrix or improving the adhesion between matrix and support.

As already mentioned, these characteristics are particularly important not only for delaying the degradation of the polymers exposed to UV radiation, but also for assuring that the stabilizer is not extracted by solvents, fats or soaps.

This is particularly important when the manufactured articles are to come into contact with food and for the production of composites composed of multilayers of organic polymers or polymer and inorganic support.

In the latter cases, the migration of the additive almost always causes detachment of the various layers, impairment of the mechanical characteristics of the manufactured articles and a more rapid degradation of the organic material.

In one form of application, the present stabilizers can be added to the organic polymer to be stabilized in the compounding step, together with small quantities of organic peroxide, which by stimulating the production of radicals allows the additive to become linked to the polymeric matrix during the working process at high temperatures.

This technology is preferably applied in the production of manufactured articles of crosslinked LDPE during the extrusion step.

More generally, the present products may be added either in the final step of the synthesis process or in the production step of the manufactured articles. For example, they can be added in the final step of the synthesis process of rubbers (butadiene-styrene, butadiene-acrylonitrile) or ABS resins (acrylonitrile-butadiene-styrene), EPDM (ethylene-propylene-norbornadiene), in which case the stabilizer becomes linked to the matrix by thermal grafting.

The addition of stabilizers in the manufacturing step of articles is, however, the most widely used in that it allows the addition level to be in accordance with the required characteristics of the articles. Examples of polymers for which the addition of the present stabilizers is particularly beneficial are polyolefins (LDPE, LLDPE, HDPE, PP), copolymers of α-olefins (e.g. ethylene and propylene) with acrylic acid or maleic anhydride, EPDM, synthetic rubber, terpolymers (e.g. ABS), polyesters, polycarbonates, polyurethanes and polyamides (e.g. water-soluble polyamides normally used in sheet plating and for the protective covering of works of art).

The present stabilizers can be added either alone or combined with other additives normally used in the art, e.g., those which are based on sterically hindered phenols (such as those commercially available as Anox® 20, Anox® PP18 and BHT), phosphites and/or phosphonites (such as those sold under the trade names Ultranox® 626, Weston® 618, Alkanox® 240, Sandostab® PEPQ) and organic compounds containing sulfur (e.g. those of the DSTDP and DLTDP type).

The present stabilizers can also be combined with other UV stabilizers such as hydroxybenzotriazoles, hydroxybenzophenones, organic Ni compounds, hydroxybenzoates and other similar products.

The quantity of siliconic additive normally used ranges from 0.05 to 1% by weight of the resin to be stabilized, preferred quantities ranging from 0.1 to 0.8% by weight of the resin.

The following examples are to further illustrate same.

### EXAMPLE 1

### Preparation of a polysiloxane of formula

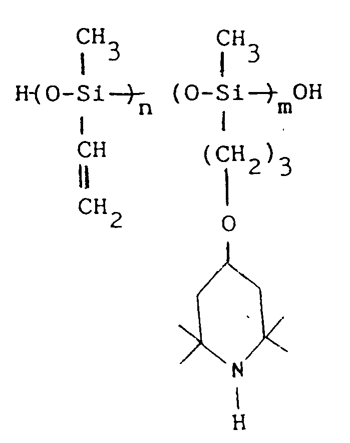

50 g of H₂O, 33.2 g (0.1m) of 4-(3-diethoxymethylsilyl-oxypropyl)-2,2,6,6-tetramethyl-piperidine, 1.6 g (0.01 moles) of methyldiethoxyvinylsilane and 0.005 g of dibutyl tin dilaurate are charged into a flask equipped with stirrer, condenser and thermometer.

The mixture is heated to reflux until gas chromatography analysis shows that there are no reactants present in the mixture.

80 ml of toluene are then added to the solution and the water layer is separated from the organic layer. The latter is washed with two 30 ml portions of water.

The organic layer is then evaporated, first at atmospheric pressure and then under vacuum, up to a temperature of 160°C and a pressure of 5 mm (Hg).

The product thus obtained is composed of a mixture of cyclic and linear products having an osmometric average molecular weight of 2,700 and a viscosity of about 30 Pa.s at 20°C.

### EXAMPLE 2

### Preparation of a stabilizer of formula

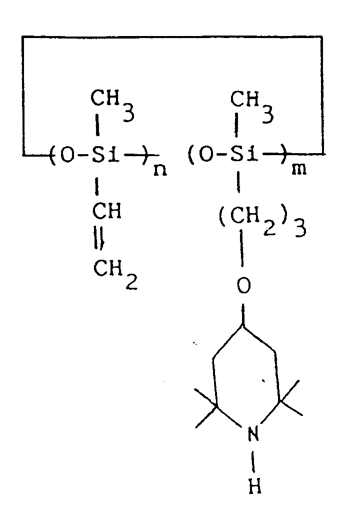

150 g of H₂O and 0.1 g of dibutyl tin dilaurate are added to 99.6 g (0.3 moles) of 4-(3-diethoxymethylsilyl-oxypropyl)-2,2,6,6-tetramethyl-piperidine and 16 g (0.1 moles) of methyldiethoxyvinylsilane.

Hydrolysis is carried out as described in example 1. The water layer is then separated and the organic layer is heated to a temperature of about 80 to 90°C for 4 hours in the presence of 0.05 g of KOH. At the end of the reaction, the product is washed with water and the organic layer is evaporated as described in example 1.

The viscous liquid residue has an average molecular weight of about 1000 and HPLC analysis shows that it has a 90% b.w. content of cyclic products.

### EXAMPLE 3

### Preparation of a stabilizer of formula

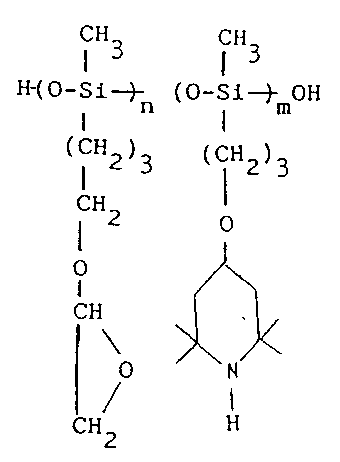

The same procedure as described in example 1 is followed, substituting the diethoxymethylvinylsilane with diethoxymethyl(gamma-glycidyloxypropyl)silane.

### EXAMPLE 4

### Preparation of a product of formula

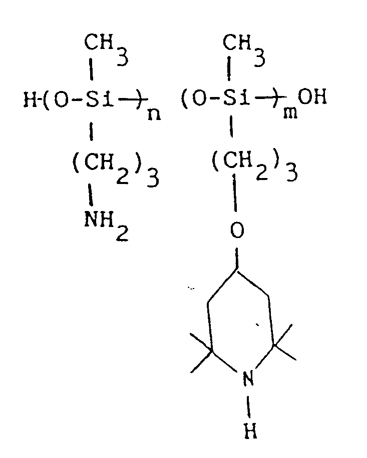

The procedure used in example 1 is followed, substituting the diethoxymethylvinylsilane with gamma-aminopropylmethyldialkoxysilane in a molar ratio of 1 mole per 10 moles of 4-(3-diethoxymethylsilyl-oxypropyl)-2,2,6,6-tetramethyl-piperidine.

### EXAMPLE 5

### Preparation of a product of formula

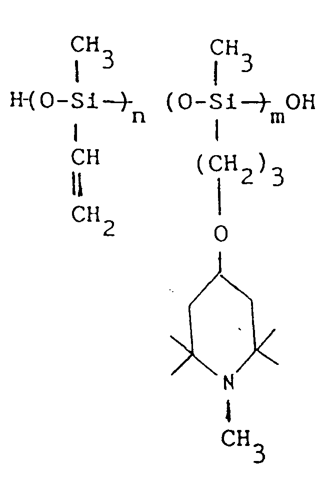

The procedure used in example 1 is followed, substituting the diethoxymethyl-3-oxypropyl-[4-(2,2,6,6-tetramethyl)-piperidinyl]-silane with diethoxymethyl-3-oxypropyl-[4-(1,2,2,6,6-pentamethyl)-piperidinyl]-silane, in the same molar ratio.

### EXAMPLE 6

### Preparation of a compound of formula

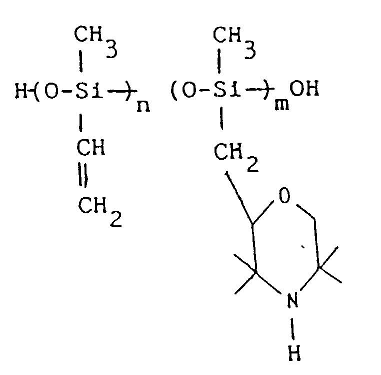

The procedure used in example 1 is followed, substituting, in the same molar ratios, the diethoxymethyl-3-oxypropyl-[4-(2,2,6,6-tetramethyl)-piperidinyl]-silane with diethoxymethyl-methylene-[2-(3,3,5,5-tetramethyl)-morpholyl]-silane.

### EXAMPLE 7

### Preparation of a compound of formula

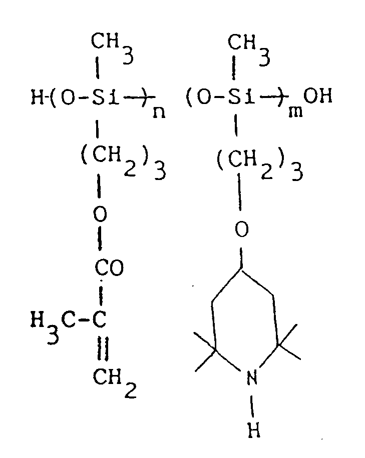

By substituting the diethoxymethylvinylsilane with diethoxymethyl-methacryloxypropylsilane in the same molar ratio as in example 1, a yellowish viscous product with an average osmometric molecular weight of 1900 is obtained.

### COMPARATIVE EXAMPLE 8

### Preparation of the compound of formula

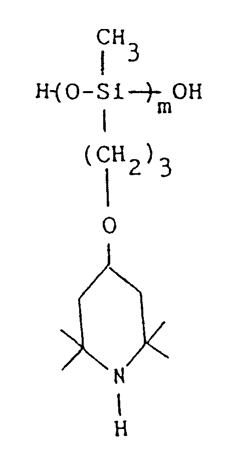

31.2 g (0.1 moles) of dichloromethyl-3-oxypropyl-[4-(2,2,6,6-tetramethyl)-piperidinyl]silane are added to 40 g of a 20% aqueous solution of NaOH kept at a temperature of 40-60°C.

At the end of the hydrolysis, toluene is added and the mixture is left at 60°C for a further 3 hours.

The organic layer is then separated from the aqueous layer, washed twice with water and evaporated up to a temperature of 160°C and 5 mm Hg.

The product thus obtained is a mixture of cyclic and linear products (50/50) with an average viscosimetric molecular weight of 2500.

### EXAMPLE 9

### Preparation of LDPE film

Each of the stabilizing compounds prepared as described in examples 1, 2, 5, 6, 7 and 8 is mixed with commercial LDPE (Riblene® A42CL), using 10 parts by weight of the stabilizing compound per 100 parts by weight of the previously pulverized polymer.

The mixing process is carried out by heating the components at 90°C for 1 hour in a powder mixer.

The master batches thus obtained are diluted with additional polymer to obtain mixtures containing 0.1 and 0.25 parts by weight, respectively, of stabilizing compound per 100 parts by weight of polymer.

In the same way a second series of mixtures is prepared, further containing 0.01 pbw of di-tert-butylperoxide per 100 pbw of polymer.

All the mixtures thus obtained are passed through a Brabender laboratory draw-plate under the following conditions:
T: 125, 150, 175, 195, 190°C
Number of screw revs: 20 rpm

The compounds extruded in the above way are cut into chips and extruded again, using the same draw-plate equipped with a flat head to obtain a 150 »m thick film.

These films are exposed to UV rays using an ATLAS® CI65 WOM (weather-O-Meter) device under the following operating conditions:
Temperature of the black panel: 60°C
Relative humidity: 50%
Cycle in the presence of total light.
Tensilte tests are carried out at different exposure times to determine the elongation at break.

The table below shows the exposure time in the WOM as number of hours necessary to decrease the elongation at break by 50% (t 50% AR).

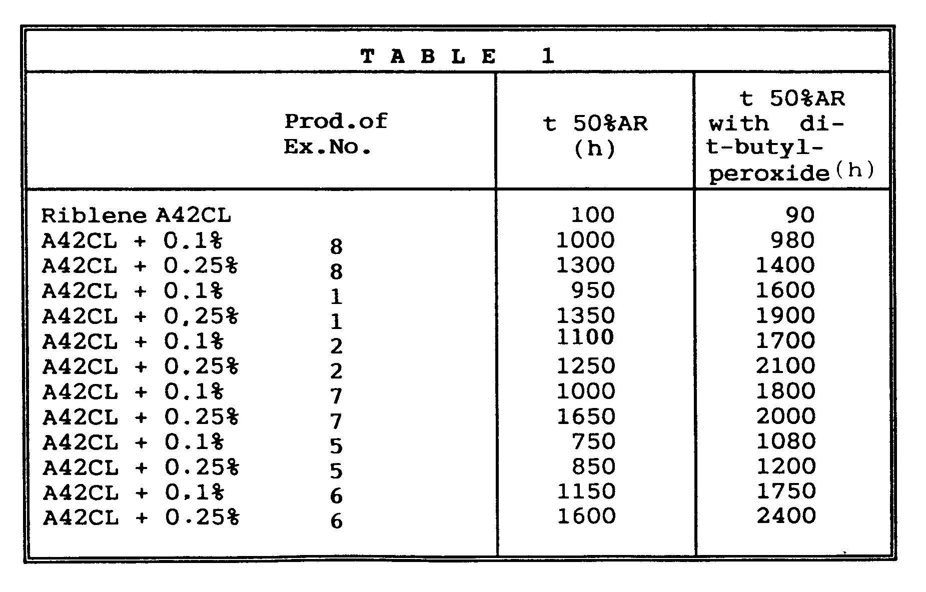

### EXAMPLE 10

### Preparation of LDPE injection moulded specimen

The same procedure as in example 9 is used for the preparation of the specimen. LDPE master batches (Riblene® A42CL) containing 10 parts by weight of products of examples 1, 2, 5, 6 and 8 per 100 parts by weight of polymer are prepared. These master batches are then diluted until the concentration of the above products corresponds to 0.1 and 0.25%, respectively, of the weight of the polymer.

At the same time compositions of the same polymer containing the same additives and additionally di-t-butylperoxide in an amount of 0.01 % by weight are prepared.

All the mixtures thus obtained are passed through a Brabender draw-plate to obtain chips which are extruded in an injection moulding press until specimen having a thickness of about 1 mm are obtained.

These specimen are exposed to an accelerated UV aging test in the device specified above.

At different exposure times of the specimen, tensile bars are obtained by punching, to determine their breaking load.

Table 2 below shows the exposure times in the WOM necessary to obtain a 50% decrease of the initial breaking load (t 50% CR).

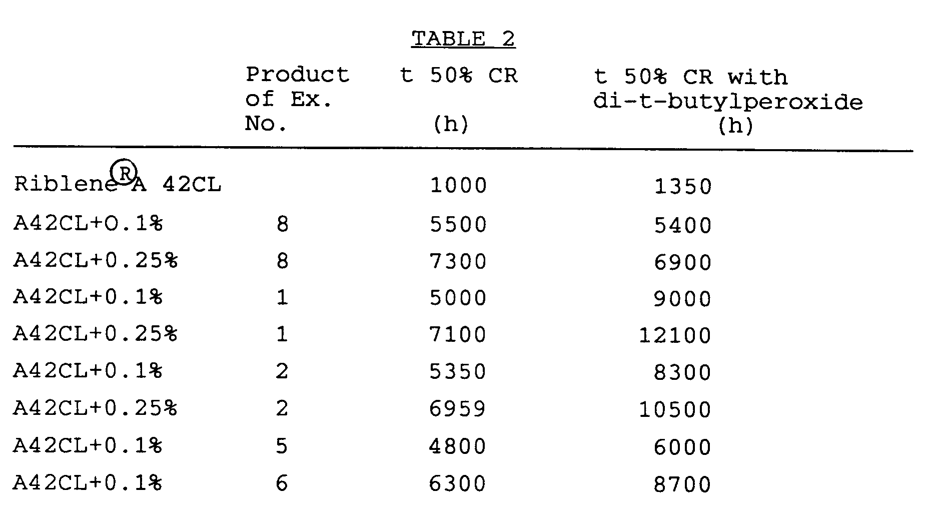

### EXAMPLE 11

### UV stabilization of an acrylonitrile-butadiene-styrene resin

A commercial ABS resin (Ravikral®) to which Alkanox® 240 had been added in quantities of 0.2% by weight of the resin, is mixed with the products of examples 1, 2, 5, 7 and 8 in quantities of 0.25 and 0.5 parts by weight, respectively, per 100 parts by weight of resin.

The powder thus obtained is mixed for 10 minutes in a Banbury mixer at a temperature of 190°C and is then extruded to obtain chips which are moulded in a press under the following conditions:

| | |
|---|---|
| Preheating: | 3 min |
| Moulding: | 3 min |
| Temperature: | 170°C. |

3 mm thick specimen are obtained and exposed in the WOM under the conditions described in example 9.

Table 3 below shows the results in terms of yellowing index (YI) with respect to the specimen not exposed in the WOM.

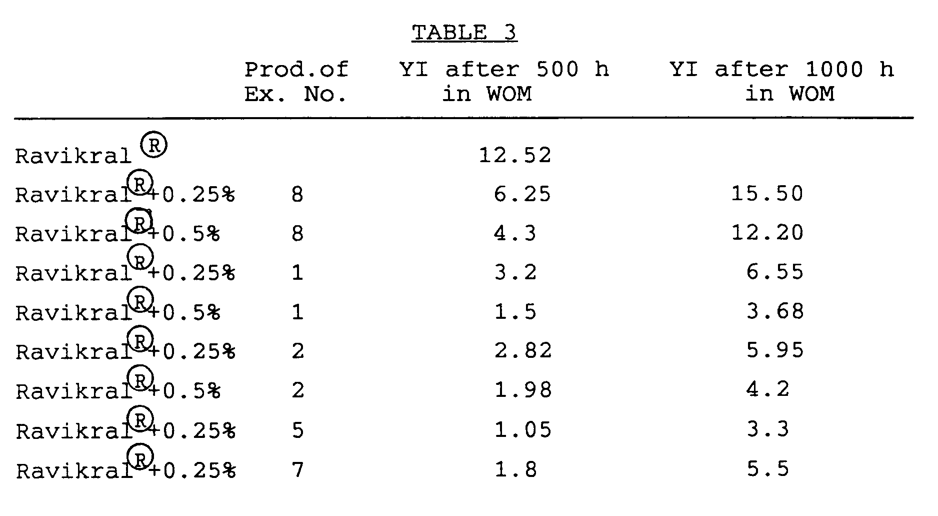

### EXAMPLE 12

### Preparation of polyamide films

Commercial polyamide (Calaton® CA of ICI) in powder form is mixed with about 1% of each of the products obtained in examples 1, 3, 4 and 8.

After mixing, part of this powder is compression moulded to obtain films having a thickness of 50 »m.

The compression moulding is carried out under the following conditions:

| | |
|---|---|
| T: | 180°C |
| P: | 200 kg/cm² |
| Moulding time: | 3 min. |

The films are then subjected to an accelerated UV aging test in the WOM (used as described in the previous examples), and the yellowing indices are determined at different exposure times.

Table 4 shows the results obtained.

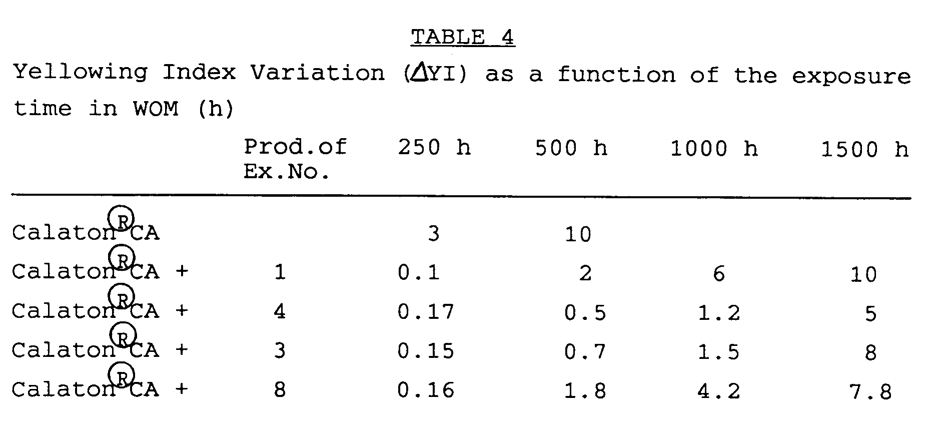

## Claims (Claims for the following Contracting State(s): AT, BE, CH, DE, DK, FR, GB, GR, IT, LI, LU, NL, SE)

1. Polymer-stabilizers of general formula (I): 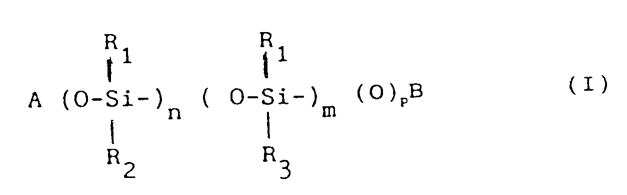 wherein:
m and n, the same or different, are integers of from 1 to 50;
A and B, the same or different, represent hydrogen, -Si(CH₃)₃ or a linear or branched C₁-C₆ alkyl ; or A and B taken together represent a direct bond, thereby giving rise to a cyclic structure;
p is 0 when A and B together represent a direct bond and is 1 otherwise;
R₁ is methyl, phenyl, alkoxy , hydroxy, -OSi(OR)₃, R being a linear or branched alkyl group,or -OSi(CH₃)₃;
R₂ is selected from CH₂=CH-, 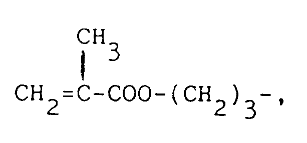 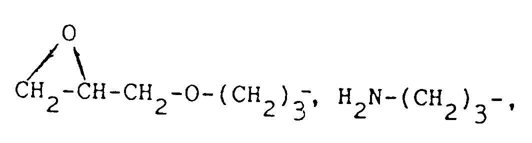 H₂N-(CH₂)₃-NH-(CH₂)₃-, 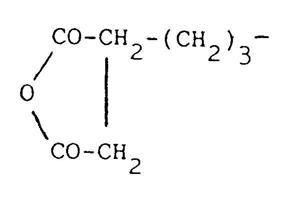
and 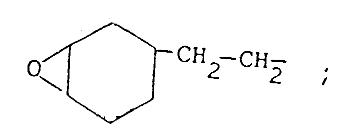 and
R₃ is a group of one of the following formulae: 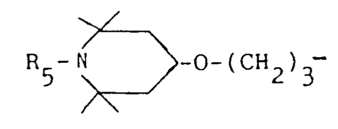 (2,2,6,6-tetramethylpiperidyl-4-oxypropyl) 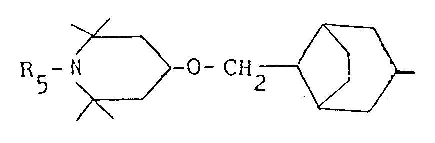 (2,2,6,6-tetramethylpiperidyl-4-oxymethylene-norbornyl) 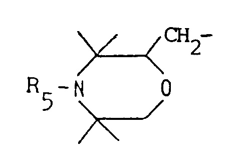 (3,3,5,5-tetramethyl-2-morpholyl-methyl);
R₅ being hydrogen, methyl or benzyl.

2. Stabilizers according to claim 1, which have a random distribution of monomeric units and a linear or cyclic structure.

3. Stabilisers according to any one of claims 1 and 2, wherein A and B taken together represent a direct bond and the sum (n+m) ranges from 3 to 7.

4. Stabilizers according to any one of claims 1 and 2, wherein A and B, the same or different, represent hydrogen, -Si(CH₃)₃ or C₁-C₆ alkyl;
R₁ is methyl;
R₂ is as defined in claim 1; and
R₃ is a group of formula 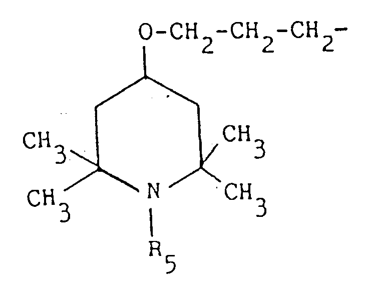 where R₅ has the meanings given in claim 1.

5. Process for the preparation of stabilizers according to claim 1 wherein A and B are hydrogen, comprising the reaction, in the presence of water and a suitable catalyst, of dialkoxysilanes of general formula (II): 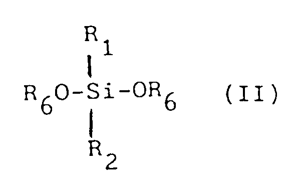 wherein R₁ and R₂ have the meaning given in claim 1 and R₆ is a C₁-C₄ alkyl group; with dialkoxysilanes of general formula (III): 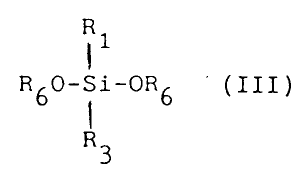 wherein R₁ and R₃ have the meanings given in claim 1 and R₆ is as defined above.

6. Process according to claim 5, wherein the reaction is carried out at the reflux temperature of the reactants, the contact thereof being maintained for 2 to 10 hours.

7. Process for the preparation of stabilizers according to claim 1 wherein at least one of A and B represents -Si(CH₃)₃, comprising the reaction of a compound of general formula (I) wherein A and B are hydrogen with a compound selected from trimethylchlorosilane, hexamethyldisiloxane and hexamethyldisilazane.

8. Process according to claim 7, wherein the reaction is carried out at a temperature of from 20 to 120°C for 1 to 5 hours.

9. Process for the preparation of stabilizers according to claim 1 wherein A and B are C₁-C₆ alkyl groups, comprising the reaction of a compound of general formula (I) wherein A and B are hydrogen with an alkohol of general formula R₄-OH, wherein R₄ is a linear or branched C₁-C₆ alkyl group, in the presence of a catalyst.

10. Process according to claim 9, wherein the reaction is carried out at a temperature of from 80 to 130°C for 1 to 8 hours.

11. Process according to any one of claims 5, 6, 9 and 10, wherein a compound selected from dibutyltin dilaurate, zinc octoate, tin octoate, alkali hydroxides and mixtures thereof is used as reaction catalyst.

12. Polymeric compositions, containing a stabilizer according to any one of claims 1 to 4.

13. Manufactured articles, obtainable from the polymeric compositions according to claim 12.

## Claims (Claims for the following Contracting State(s): ES)

1. Process for the preparation of polymer-stabilizers of general formula (I): 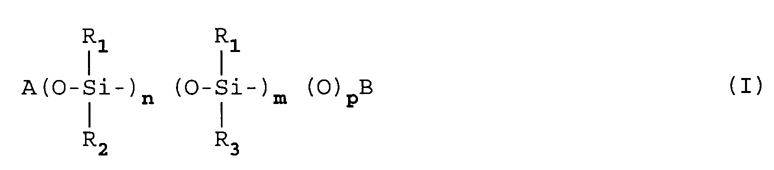 wherein:
m and n, the same or different, are integers of from 1 to 50;
A and B, the same or different, represent hydrogen, -Si(CH₃)₃ or a linear or branched C₁-C₆ alkyl; or A and
B taken together represent a direct bond, thereby giving rise to a cyclic structure;
p is 0 when A and B together represent a direct bond and is 1 otherwise;
R₁ is methyl, phenyl, alkoxy, hydroxy, -OSi(OR)₃, R being a linear or branched alkyl group, or -OSi(CH₃)₃;
R₂ is selected from CH₂=CH-, 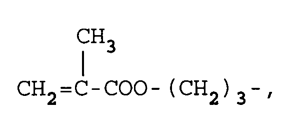 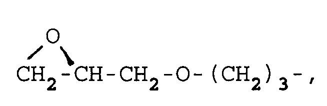 H₂N-(CH₂)₃-, H₂N-(CH₂)₃-NH-(CH₂)₃-, 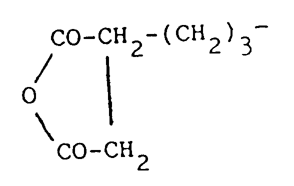 and 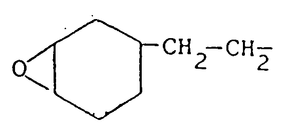 and R₃ is a group of one of the following formulae: 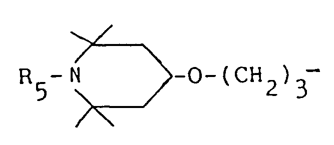 (2,2,6,6-tetramethylpiperidyl-4-oxypropyl) 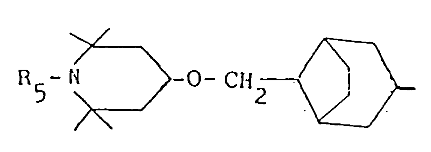 (2,2,6,6-tetramethylpiperidyl-4-oxymethylene-norbornyl) 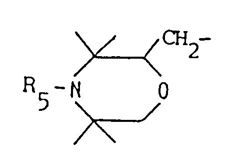 (3,3,5,5-tetramethyl-2-morpholyl-methyl);
R₅ being hydrogen, methyl or benzyl;
said process comprising,
(a) when A and B are hydrogen, the reaction, in the presence of water and a suitable catalyst, of dialkoxysilanes of general formula (II): 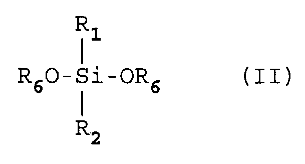 wherein R₁ and R₂ have the meanings given above and R₆ is a C₁-C₄ alkyl group; with dialkoxysilanes of general formula (III): 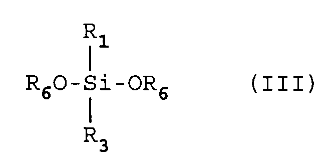 wherein R₁ and R₃ have the meanings given above and R₆ is as defined above;
(b) when at least one of A and B represents -Si(CH₃)₃, the reaction of a compound of general formula (I) wherein A and B are hydrogen with a compound selected from trimethylchlorosilane, hexamethyldisiloxane and hexamethyldisilazane;
(c) when A and B are C₁-C₆ alkyl groups, the reaction of a compound of general formula (I) wherein A and B are hydrogen with an alcohol of general formula R₄-OH, wherein R₄ is a linear or branched C₁-C₆ alkyl group, in the presence of a catalyst;
(d) when A and B taken together represent a direct bond,
(i) the heating of the above linear products to a temperature of from 130 to 180°C under a vacuum of 0.5 to 2 mm Hg; or
(ii) the hydrolysis of two corresponding dialkoxysilane or dichlorosilane monomers in the required ratios.

2. Process according to claim 1, wherein stabilizers having a random distribution of monomeric units and a linear or cyclic structure are produced.

3. Process according to any one of claims 1 and 2, wherein stabilizers in which A and B taken together represent a direct bond and the sum (n + m) ranges from 3 to 7 are produced.

4. Process according to any one of claims 1 and 2, wherein stabilizers are produced in which A and B, the same or different, represent hydrogen, -Si(CH₃)₃ or C₁-C₆ alkyl;
R₁ is methyl;
R₂ is as defined in claim 1; and
R₃ is a group of formula 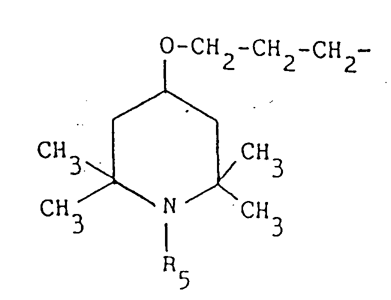
where R₅ has the meanings given in claim 1.

5. Process according to claim 1, alternative (a), wherein the reaction is carried out at the reflux temperature of the reactants, the contact thereof being maintained for 2 to 10 hours.

6. Process according to claim 1, alternative (b), wherein the reaction is carried out at a temperature of from 20 to 120°C for 1 to 5 hours.

7. Process according to claim 1, alternative (c), wherein the reaction is carried out at a temperature of from 80 to 130°C for 1 to 8 hours.

8. Process according to any one of claims 1, alternatives (a) and (c), 5 and 7, wherein a compound selected from dibutyltin dilaurate, zinc octoate, tin octoate, alkali hydroxides and mixtures thereof is used as reaction catalyst.

9. Polymeric compositions, containing a stabilizer prepared according to the process of any one of claims 1 to 8.

10. Manufactured articles, obtainable from the polymeric compositions according to claim 9.

## Patentansprüche (Patentansprüche für folgende(n) Vertragsstaat(en): AT, BE, CH, DE, DK, FR, GB, GR, IT, LI, LU, NL, SE)

1. Polymer-Stabilisatoren der allgemeinen Formel (I): 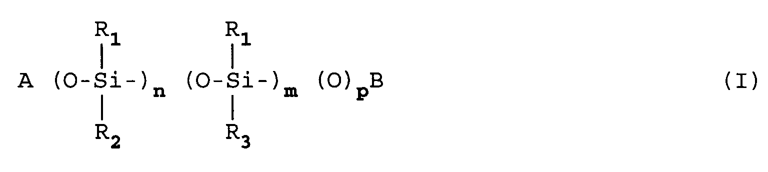 worin:
m und n, gleich oder verschieden, ganze Zahlen von 1 bis 50 darstellen;
A und B, gleich oder verschieden, für Wasserstoff, -Si(CH₃)₃ oder lineares oder verzweigtes C₁-C₆-Alkyl stehen; oder A und B zusammengenommen eine direkte Bindung darstellen, wodurch ein cyclische Struktur gebildet wird;
p 0 ist, wenn A und B zusammen eine direkte Bindung darstellen, und ansonsten 1 ist;
R₁ Methyl, Phenyl, Alkoxy, Hydroxy, -OSi(OR)₃, wobei R eine lineare oder verzweigte Alkylgruppe ist, oder -OSi(CH₃)₃ darstellt;
R₂ ausgewählt ist aus CH₂=CH-, 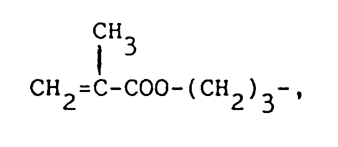 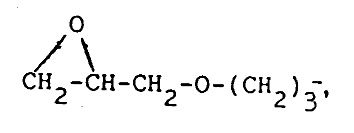 H₂N-(CH₂)₃-, H₂N-(CH₂)₃-NH-(CH₂)₃-, 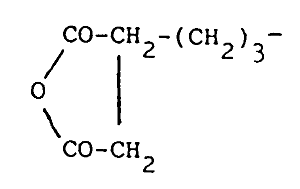 und 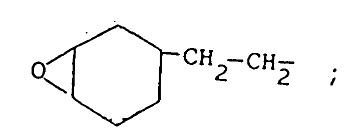 und R₃ eine Gruppe mit einer der folgenden Formeln ist: 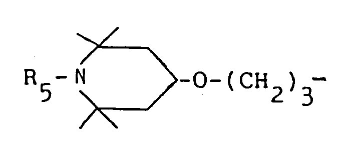 (2,2,6,6-Tetramethylpiperidyl-4-oxypropyl) 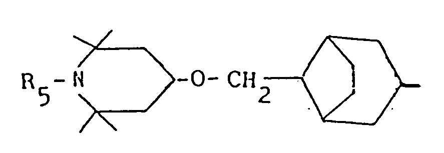 (2,2,6,6-Tetramethylpiperidyl-4-oxymethylennorbornyl) 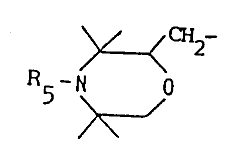 (3,3,5,5-Tetramethyl-2-morpholylmethyl);
wobei R₅ für Wasserstoff, Methyl oder Benzyl steht.

2. Stabilisatoren nach Anspruch 1, die eine statistische Verteilung der Monomer-Einheiten und eine lineare oder cyclische Struktur aufweisen.

3. Stabilisatoren nach irgendeinem der Ansprüche 1 und 2, in denen A und B zusammengenommen eine direkte Bindung darstellen und die Summe (n + m) im Bereich von 3 bis 7 liegt.

4. Stabilisatoren nach irgendeinem der Ansprüche 1 und 2, in denen A und B, gleich oder verschieden, für Wasserstoff, -Si(CH₃)₃ oder C₁-C₆-Alkyl stehen;
R₁ Methyl ist;
R₂ wie in Anspruch 1 definiert ist; und
R₃ ein Gruppe der Formel 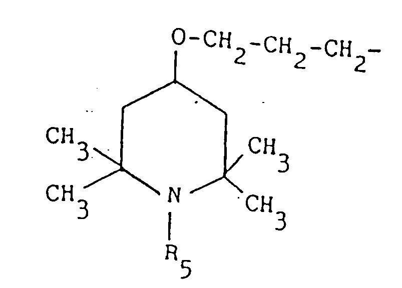 darstellt, worin R₅ die in Anspruch 1 angegebenen Bedeutungen aufweist.

5. Verfahren zur Herstellung von Stabilisatoren gemäß Anspruch 1, in denen A und B für Wasserstoff stehen, umfassend die Umsetzung, in Anwesenheit von Wasser und eines geeigneten Katalysators, von Dialkoxysilanen der allgemeinen Formel (II): 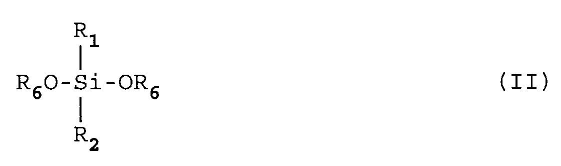 worin R₁ und R₂ die in Anspruch 1 angegebene Bedeutung aufweisen und R₆ eine C₁-C₄-Alkylgruppe darstellt; mit Dialkoxysilanen der allgemeinen Formel (III): 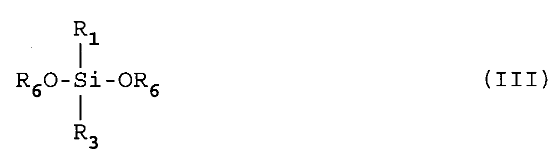 worin R₁ und R₃ die in Anspruch 1 angegebenen Bedeutungen aufweisen und R₆ wie oben definiert ist.

6. Verfahren nach Anspruch 5, in welchem die Umsetzung bei der Rückflußtemperatur der Reaktanten durchgeführt wird, wobei der Kontakt derselben 2 bis 10 Stunden lang aufrechterhalten wird.

7. Verfahren zur Herstellung von Stabilisatoren gemäß Anspruch 1, in denen mindestens eines von A und B für -Si(CH₃)₃ steht, umfassend die Umsetzung einer Verbindung der allgemeinen Formel (I), in welcher A und B für Wasserstoff stehen, mit einer aus Trimethylchlorsilan, Hexamethyldisiloxan und Hexamethyldisilazan ausgewählten Verbindung.

8. Verfahren nach Anspruch 7, in welchem die Umsetzung bei einer Temperatur von 20 bis 120°C 1 bis 5 Stunden lang durchgeführt wird.

9. Verfahren zur Herstellung von Stabilisatoren gemäß Anspruch 1, in welchem A und B für C₁-C₆-Alkylgruppen stehen, umfassend die Umsetzung einer Verbindung der allgemeinen Formel (I), in welcher A und B für Wasserstoff stehen, mit einem Alkohol der allgemeinen Formel R₄-OH, wobei R₄ eine lineare oder verzweigte C₁-C₆-Alkylgruppe ist, in Anwesenheit eines Katalysators.

10. Verfahren nach Anspruch 9, in welchem die Umsetzung bei einer Temperatur von 80 bis 130°C 1 bis 8 Stunden lang durchgeführt wird.

11. Verfahren nach irgendeinem der Ansprüche 5, 6, 9 und 10, in welchem eine Verbindung, die aus Dibutylzinndilaurat, Zinkoctoat, Zinnoctoat, Alkalihydroxiden und Mischungen davon ausgewählt ist, als Reaktionskatalysator eingesetzt wird.

12. Polymere Zusammensetzungen, enthaltend einen Stabilisator gemäß irgendeinem der Ansprüche 1 bis 4.

13. Hergestellte Gegenstände, erhältich aus den polymeren Zusammensetzungen gemäß Anspruch 12.

## Patentansprüche (Patentansprüche für folgende(n) Vertragsstaat(en): ES)

1. Verfahren zur Herstellung von Polymer-Stabilisatoren der allgemeinen Formel (I): 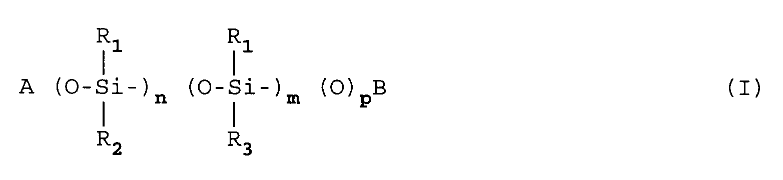 worin:
m und n, gleich oder verschieden, ganze Zahlen von 1 bis 50 darstellen;
A und B, gleich oder verschieden, für Wasserstoff, -Si(CH₃)₃ oder lineares oder verzweigtes C₁-C₆-Alkyl stehen; oder A und B zusammengenommen eine direkte Bindung darstellen, wodurch ein cyclische Struktur gebildet wird;
p 0 ist, wenn A und B zusammen eine direkte Bindung darstellen, und ansonsten 1 ist;
R₁ Methyl, Phenyl, Alkoxy, Hydroxy, -OSi(OR)₃, wobei R eine lineare oder verzweigte Alkylgruppe ist, oder -OSi(CH₃)₃ darstellt;
R₂ ausgewählt ist aus 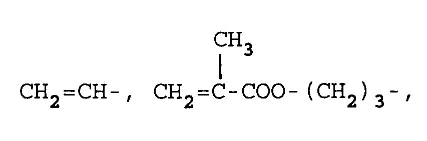 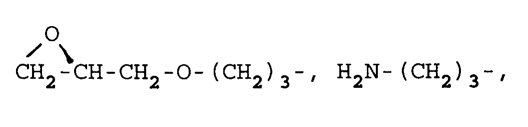 H₂N-(CH₂)₃-NH-(CH₂)₃-, 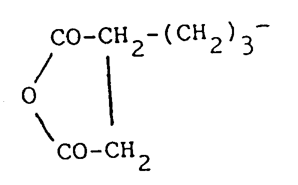 und 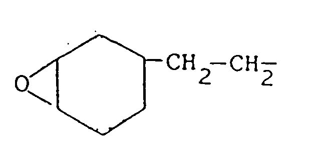 und R₃ eine Gruppe mit einer der folgenden Formeln ist: 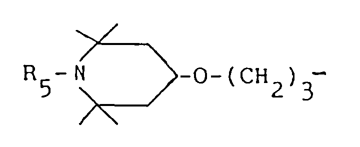 (2,2,6,6-Tetramethylpiperidyl-4-oxypropyl) 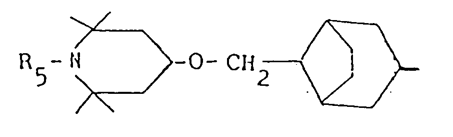 (2,2,6,6-Tetramethylpiperidyl-4-oxymethylennorbornyl) 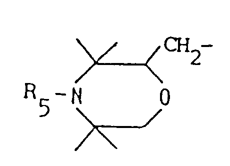 (3,3,5,5-Tetramethyl-2-morpholylmethyl);
wobei R₅ für Wasserstoff, Methyl oder Benzyl steht;
wobei das Verfahren umfaßt
(a) wenn A und B für Wasserstoff stehen, die Umsetzung, in Anwesenheit von Wasser und eines geeigneten Katalysators, von Dialkoxysilanen der allgemeinen Formel (II): 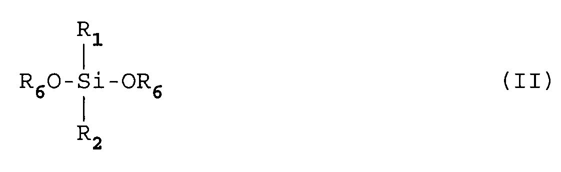 worin R₁ und R₂ die oben angegebenen Bedeutungen aufweisen und R₆ eine C₁-C₄-Alkylgruppe darstellt; mit Dialkoxysilanen der allgemeinen Formel (III): 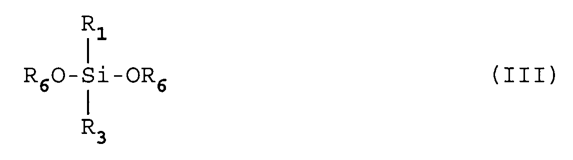 worin R₁ und R₃ die oben angegebenen Bedeutungen aufweisen und R₆ wie oben definiert ist;
(b) wenn mindestens eines von A und B für -Si(CH₃)₃ steht, die Umsetzung einer Verbindung der allgemeinen Formel (I), in welcher A und B für Wasserstoff stehen, mit einer Verbindung, die aus Trimethylchlorsilan, Hexamethyldisiloxan und Hexamethyldisilazan ausgewählt ist;
(c) wenn A und B für C₁-C₆-Alkylgruppen stehen, die Umsetzung einer Verbindung der allgemeinen Formel (I), in welcher A und B für Wasserstoff stehen, mit einem Alkohol der allgemeinen Formel R₄-OH, worin R₄ eine lineare oder verzweigte C₁-C₆-Alkylgruppe darstellt, in Anwesenheit eines Katalysators;
(d) wenn A und B zusammengenommen eine direkte Bindung darstellen,
(i) die Erwärmung der obigen linearen Produkte auf eine Temperatur von 130 bis 180°C unter einem Vakuum von 0,5 bis 2 mm Hg; oder
(ii) die Hydrolyse von zwei entsprechenden Dialkoxysilan- oder Dichlorsilan-Monomeren in den erforderliche Verhältnissen.

2. Verfahren nach Anspruch 1, in welchem Stabilisatoren mit einer statistischen Verteilung von Monomer-Einheiten und einer linearen oder cyclischen Struktur hergestellt werden.

3. Verfahren nach irgendeinem der Ansprüche 1 und 2, in welchem Stabilisatoren hergestellt werden, in denen A und B zusammengenommen eine direkte Bindung darstellen und die Summe (n + m) im Bereich von 3 bis 7 liegt.

4. Verfahren nach irgendeinem der Ansprüche 1 und 2, in welchem Stabilisatoren hergestellt werden, in denen A und B, gleich oder verschieden, für Wasserstoff, -Si(CH₃)₃ oder C₁-C₆-Alkyl stehen;
R₁ Methyl ist;
R₂ wie in Anspruch 1 definiert ist; und
R₃ eine Gruppe der Formel 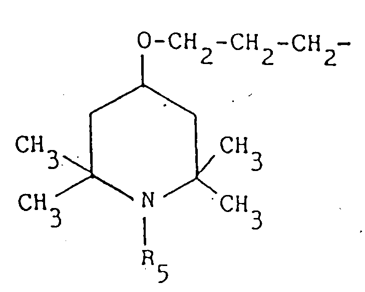 darstellt, in welcher R₅ die in Anspruch 1 angegebenen Bedeutungen aufweist.

5. Verfahren nach Anspruch 1, Alternative (a), in welchem die Umsetzung bei der Rückflußtemperatur der Reaktanten durchgeführt wird, wobei der Kontakt derselben für 2 bis 10 Stunden aufrechterhalten wird.

6. Verfahren nach Anspruch 1, Alternative (b), in welchem die Umsetzung bei einer Temperatur von 20 bis 120°C 1 bis 5 Stunden lang durchgeführt wird.

7. Verfahren nach Anspruch 1, Alternative (c), in welchem die Umsetzung bei einer Temperatur von 80 bis 130°C 1 bis 8 Stunden lang durchgeführt wird.

8. Verfahren nach irgendeinem der Ansprüche 1, Alternativen (a) und (c), 5 und 7, in welchem eine Verbindung, die aus Dibutylzinndilaurat, Zinkoctoat, Zinnoctoat, Alkalihydroxiden und Mischungen davon ausgewählt ist, als Reaktionskatalysator verwendet wird.

9. Polymere Zusammensetzungen, enthaltend einen gemäß dem Verfahren nach irgendeinem der Ansprüche 1 bis 8 hergestellten Stabilisator.

10. Hergestellte Gegenstände, erhältlich aus den polymeren Zusammensetzungen nach Anspruch 9.

## Revendications (Revendications pour l'(les) Etat(s) contractant(s) suivant(s): AT, BE, CH, DE, DK, FR, GB, GR, IT, LI, LU, NL, SE)

1. Agents stabilisants pour polymères, de formule générale (I) : 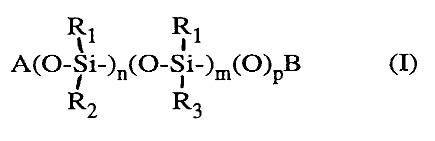 dans laquelle :
m et n, qui peuvent être identiques ou différents, représentent des nombres entiers valant de 1 à 50 ;
A et B, qui peuvent être identiques ou différents, représentent chacun un atome d'hydrogène, un groupe -Si(CH₃)₃ ou un groupe alkyle linéaire ou ramifié en C₁₋₆, ou bien A et B, considérés conjointement, représentent une liaison directe, établissant ainsi une structure cyclique ;
p vaut 0 si A et B représentent une liaison directe, et 1 dans les autres cas ;
R₁ représente un groupe méthyle, phényle, alcoxy ou hydroxy, ou un groupe de formule -OSi(CH₃)₃ ou -OSi(OR)₃ où R représente un groupe alkyle linéaire ou ramifié ;
R₂ est choisi parmi
H₂C=CH-, 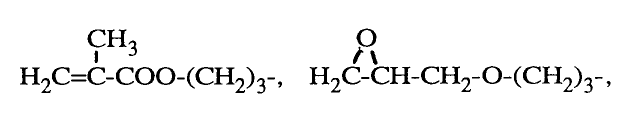 H₂N-(CH₂)₃-, H₂N-(CH₂)₃-NH-(CH₂)₃-, 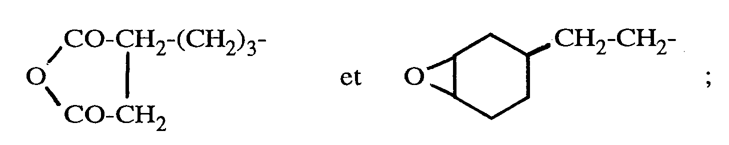 et
R₃ représente un groupe correspondant à l'une des formules suivantes : 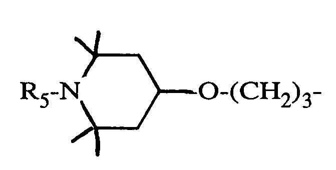 (2,2,6,6-tétraméthylpipéridyl-4-oxypropyle) 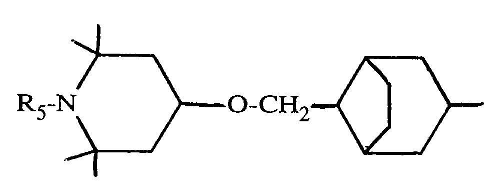 (2,2,6,6-tétraméthylpipéridyl-4-oxyméthylène-norbornyle) 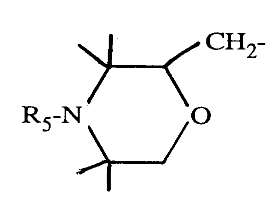 (3,3,5,5-tétraméthyl-2-morpholyl-méthyle) où R₅ représente un atome d'hydrogène ou un groupe méthyle ou benzyle.

2. Agents stabilisants conformes à la revendication 1, qui présentent une répartition aléatoire de motifs monomères et une structure linéaire ou cyclique.

3. Agents stabilisants conformes à l'une des revendications 1 et 2, dans lesquels A et B, considérés conjointement, représentent une liaison directe et la somme (n+m) vaut de 3 à 7.

4. Agents stabilisants conformes à l'une des revendications 1 et 2, dans lesquels A et B, qui peuvent être identiques ou différents, représentent chacun un atome d'hydrogène, un groupe -Si(CH₃)₃ ou un groupe alkyle en C₁₋₆, R₁ représente un groupe méthyle, R₂ est tel que défini dans la revendication 1, et R₃ représente un groupe de formule 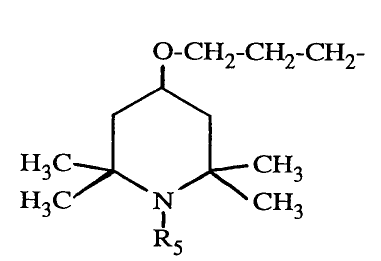 où R₅ possède la signification indiquée dans la revendication 1.

5. Procédé de préparation d'agents stabilisants conformes à la revendication 1 et dans lesquels A et B représentent des atomes d'hydrogène, qui comporte le fait de faire réagir, en présence d'eau et d'un catalyseur approprié, des dialcoxysilanes de formule générale (II) : 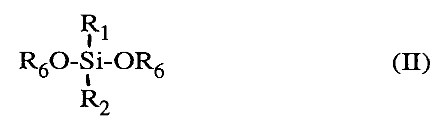 dans laquelle R₁ et R₂ ont les significations indiquées dans la revendication 1 et R₆ représente un groupe alkyle en C₁₋₄, avec des dialcoxysilanes de formule générale (III) : 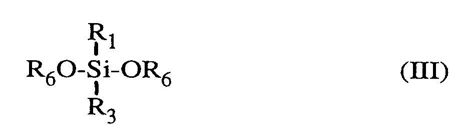 dans laquelle R₁ et R₂ ont les significations indiquées dans la revendication 1 et R₆ est tel que défini ci-dessus.

6. Procédé conforme à la revendication 5, dans lequel on effectue la réaction à la température de reflux des réactifs, en maintenant ceux-ci en contact pendant 2 à 10 heures.

7. Procédé de préparation d'agents stabilisants conformes à la revendication 1 et dans lesquels au moins l'un des symboles A et B représente un groupe -Si(CH₃)₃, qui comporte le fait de faire réagir un composé de formule générale (I) où A et B représentent des atomes d'hydrogène avec un composé choisi parmi le triméthylchlorosilane, l'hexaméthyldisiloxane et l'hexaméthyldisilazane.

8. Procédé conforme à la revendication 7, dans lequel on effectue la réaction à une température de 20°C à 120°C, pendant 1 à 5 heures.

9. Procédé de préparation d'agents stabilisants conformes à la revendication 1 et dans lesquels A et B représentent des groupes alkyle en C₁₋₆, qui comporte le fait de faire réagir un composé de formule générale (I) où A et B représentent des atomes d'hydrogène avec un alcool de formule générale R₄-OH dans laquelle R₄ représente un groupe alkyle en C₁₋₆ linéaire ou ramifié, en présence d'un catalyseur.

10. Procédé conforme à la revendication 9, dans lequel on effectue la réaction à une température de 80°C à 130°C, pendant 1 à 8 heures.

11. Procédé conforme à l'une des revendications 5, 6, 9 et 10, dans lequel on utilise, en tant que catalyseur de réaction, un composé choisi parmi le dilaurate de dibutyl-étain, l'octanoate de zinc, l'octanoate d'étain, les hydroxydes alcalins et leurs mélanges.

12. Compositions de polymères, qui contiennent un agent stabilisant conforme à l'une des revendications 1 à 4.

13. Articles manufacturés que l'on peut obtenir à partir d'une composition de polymères conforme à la revendication 12.

## Revendications (Revendications pour l'(les) Etat(s) contractant(s) suivant(s): ES)

1. Procédé de préparation d'agents stabilisants pour polymères, de formule générale (I) : 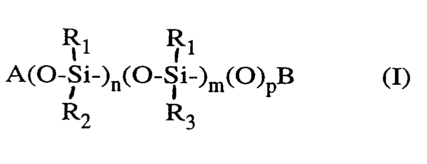 dans laquelle :
m et n, qui peuvent être identiques ou différents, représentent des nombres entiers valant de 1 à 50 ;
A et B, qui peuvent être identiques ou différents, représentent chacun un atome d'hydrogène, un groupe -Si(CH₃)₃ ou un groupe alkyle linéaire ou ramifié en C₁₋₆, ou bien A et B, considérés conjointement, représentent une liaison directe, établissant ainsi une structure cyclique ;
p vaut 0 si A et B représentent une liaison directe, et 1 dans les autres cas ;
R₁ représente un groupe méthyle, phényle, alcoxy ou hydroxy, ou un groupe de formule -OSi(CH₃)₃ ou -OSi(OR)₃ où R représente un groupe alkyle linéaire ou ramifié ;
R₂ est choisi parmi
H₂C=CH-, 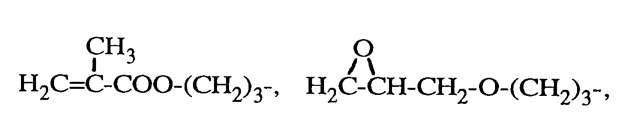 H₂N-(CH₂)₃-, H₂N-(CH₂)₃-NH-(CH₂)₃-, 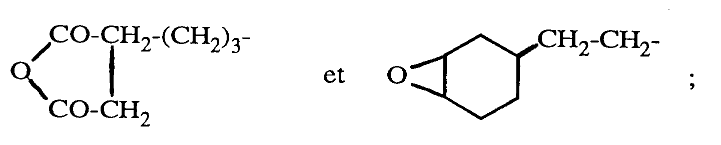 et R₃ représente un groupe correspondant à l'une des formules suivantes : 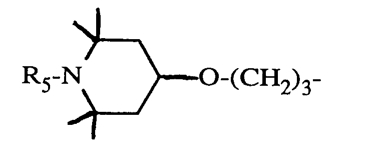 (2,2,6,6-tétraméthylpipéridyl-4-oxypropyle) 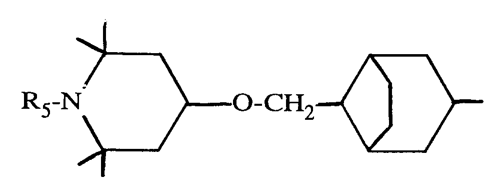 (2,2,6,6-tétraméthylpipéridyl-4-oxyméthylène-norbornyle) 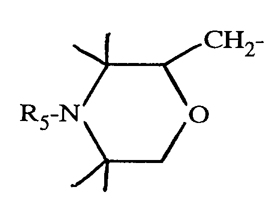 (3,3,5,5-tétraméthyl-2-morpholyl-méthyle)
où R₅ représente un atome d'hydrogène ou un groupe méthyle ou benzyle,
lequel procédé comporte :
a) si A et B représentent des atomes d'hydrogène, le fait de faire réagir, en présence d'eau et d'un catalyseur approprié, des dialcoxysilanes de formule générale (II) : 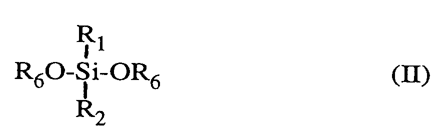 dans laquelle R₁ et R₂ ont les significations indiquées ci-dessus et R₆ représente un groupe alkyle en C₁₋₄,
avec des dialcoxysilanes de formule générale (III) : 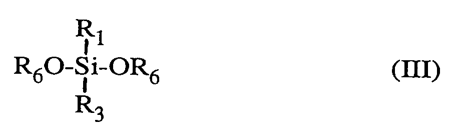 dans laquelle R₁ et R₂ ont les significations indiquées ci-dessus et R₆ est tel que défini ci-dessus ;
b) si au moins l'un des symboles A et B représente un groupe -Si(CH₃)₃, le fait de faire réagir un composé de formule générale (I) où A et B représentent des atomes d'hydrogène avec un composé choisi parmi le triméthylchlorosilane, l'hexaméthyldisiloxane et l'hexaméthyldisilazane ;
c) si A et B représentent des groupes alkyle en C₁₋₆, le fait de faire réagir un composé de formule générale (I) où A et B représentent des atomes d'hydrogène avec un alcool de formule générale R₄-OH dans laquelle R₄ représente un groupe alkyle en C₁₋₆ linéaire ou ramifié, en présence d'un catalyseur ;
d) si A et B, considérés conjointement, représentent une liaison directe,
i) le fait de chauffer les produits linéaires dont il est question ci-dessus, à une température de 130°C à 180°C et sous vide, c'est-à-dire sous une pression de 0,5 à 2 mmHg ; ou bien
ii) le fait de soumettre à une hydrolyse les deux monomères correspondants de type dialcoxysilane ou dichlorosilane, présents en les proportions nécessaires.

2. Procédé conforme à la revendication 1, dans lequel on obtient des agents stabilisants qui présentent une répartition aléatoire de motifs monomères et une structure linéaire ou cyclique.

3. Procédé conforme à l'une des revendications 1 et 2, dans lequel on obtient des agents stabilisants dans lesquels A et B, considérés conjointement, représentent une liaison directe et la somme (n+m) vaut de 3 à 7.

4. Procédé conforme à l'une des revendications 1 et 2, dans lequel on obtient des agents stabilisants dans lesquels A et B, qui peuvent être identiques ou différents, représentent chacun un atome d'hydrogène, un groupe -Si(CH₃)₃ ou un groupe alkyle en C₁₋₆, R₁ représente un groupe méthyle, R₂ est tel que défini dans la revendication 1, et R₃ représente un groupe de formule 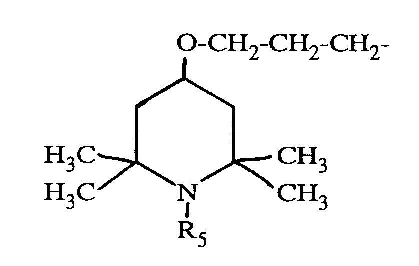 où R₅ possède la signification indiquée dans la revendication 1.

5. Procédé conforme à la revendication 1, variante (a), dans lequel on effectue la réaction à la température de reflux des réactifs, en maintenant ceux-ci en contact pendant 2 à 10 heures.

6. Procédé conforme à la revendication 1, variante (b), dans lequel on effectue la réaction à une température de 20°C à 120°C, pendant 1 à 5 heures.

7. Procédé conforme à la revendication 1, variante (c), dans lequel on effectue la réaction à une température de 80°C à 130°C, pendant 1 à 8 heures.

8. Procédé conforme à l'une des revendications 1, variantes (a) et (c), 5 et 7, dans lequel on utilise, en tant que catalyseur de réaction, un composé choisi parmi le dilaurate de dibutyl-étain, l'octanoate de zinc, l'octanoate d'étain, les hydroxydes alcalins et leurs mélanges.

9. Compositions de polymères, qui contiennent un agent stabilisant préparé selon un procédé conforme à l'une des revendications 1 à 8.

10. Articles manufacturés que l'on peut obtenir à partir d'une composition de polymères conforme à la revendication 9.
